# NEUE EUROPÄISCHE PATENTSCHRIFT

(11) **EP 3 770 086 B2**
(45) Veröffentlichungstag und Bekanntmachung des Hinweises auf die Entscheidung über den Einspruch: **26.08.2026**
(45) Hinweis auf die Patenterteilung: 18.10.2023
(21) Anmeldenummer: 20180873.0
(22) Anmeldetag: 18.06.2020
(51) Int. Cl.: B65G 47/08

(54) **VERFAHREN UND VORRICHTUNG ZUM UMGANG MIT IN MINDESTENS EINER REIHE HINTEREINANDER BEWEGTEN STÜCKGÜTERN**
DEVICE AND METHOD FOR HANDLING PIECE GOODS MOVED BEHIND EACH OTHER IN AT LEAST ONE ROW
PROCÉDÉ ET DISPOSITIF DE MANIPULATION DES MARCHANDISES DÉPLACÉES LES UNES APRÈS LES AUTRES DANS AU MOINS UNE RANGÉE

(30) Priorität: 26.07.2019 DE 102019120288
(43) Veröffentlichungstag der Anmeldung: 27.01.2021
(73) Patentinhaber: Krones Aktiengesellschaft, 93073 Neutraubling (DE)
(72) Erfinder: BEER, Erhard, 93073 Neutraubling (DE); KIRZINGER, Johannes, 93073 Neutraubling (DE); KOLLMUSS, Manuel, 93073 Neutraubling (DE)
(74) Vertreter: Hannke Bittner & Partner mbB Regensburg

(56) Entgegenhaltungen:
- EP-A2- 2 246 277
- DE-A1- 102016 125 361
- DE-A1- 102017 215 320
- US-A1- 2005 246 056

## Beschreibung

Die vorliegende Erfindung betrifft ein Verfahren und eine Vorrichtung zum Umgang mit in mindestens einer Reihe hintereinander bewegten Stückgütern gemäß den Merkmalen der unabhängigen Ansprüche.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinandergestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 465 101 A2 offenbart eine Vorrichtung zur Reihenbildung von Packgütern für Gebindepalettierer. Der Gebindepalettierer umfasst mindestens eine Lagenstation und mindestens eine Palettierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere Schrumpfpacks, zur Schichtenbildung, umfassend einen kontinuierlich antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle spielt kommt zudem dem Reibwiderstand zwischen dem jeweiligen Förder- oder Transportband und der Unterseite des jeweiligen Stückgutes zu, was dazu führt, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sog. Eintakten vom Zuteilband auf das Transportband ergibt. Alle diese Effekte erhöhen die Zeitdauer, die für die Erstellung einer Palette benötigt wird.

Um diese Nachteile zu vermeiden, werden in der EP 2 107 018 A1 ein Verfahren und eine Vorrichtung vorgeschlagen, mit denen eine sichere, schnelle und qualitativ hochwertige Bereitstellung von Takten aus Gebinden und/oder Gebindegruppen möglich sein sollen, um solchermaßen die Reihen für die Lagen einer Palette auf effektive Weise erstellen zu können. Die vorgeschlagene Vorrichtung dient dem Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagenbildungsband ist zum Antrieb mit jeweils einem eigenen Motor versehen. Mittels einer Steuerung wird die Geschwindigkeit des Zuteilbandes reguliert, damit die auf dem Zuteilband Stoß an Stoß transportierten Gebinde bzw. Gebindegruppen auf dem Transportband in mehrere Takte aus Gebinden bzw. Gebindegruppen aufgeteilt werden können. Zwischen den einzelnen Takten werden vordefinierte Lücken gebildet. Dem Reihen- oder Lagenbildungsband kann ein Roboter zugeordnet sein, der die vom Transportband einlaufenden Takte zur Lagenbildung in Transportrichtung oder quer zur Transportrichtung verschieben und/oder drehen kann. Zudem soll das Lagenbildungsband die Erzeugung einer aus mehreren Reihen gebildeten Lage ermöglichen.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Das Dokument DE 10 2017 215320 A1 offenbart ein Verfahren zum Umgang mit in mindestens einer Reihe hintereinander bewegten Stückgütern nach dem Oberbegriff des Anspruchs 1 und eine Vorrichtung zur Durchführung eines Verfahrens zum Umgang mit in mindestens einer Reihe hintereinander bewegten Stückgütern nach dem Oberbegriff des Anspruchs 8.

Ein Hauptziel ist es, eine präzise Positionierung von Stückgütern, Paketen, Gebinden und/oder Artikeln zu ermöglichen, insbesondere für eine möglichst störungsfreie und zuverlässige Lagenbildungs-, Palettierungs- und/oder Verpackungsvorbereitung. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen. Das Verfahren soll die Verarbeitung von Stückgütern ermöglichen, die in mindestens einer Reihe lückenlos befördert bzw. transportiert werden. Zudem soll das Verfahren mit höherer Geschwindigkeit ablaufen können als dies bisher möglich war, ohne dass damit Nachteile hinsichtlich der Positionierungspräzision und/oder der Zuverlässigkeit der Manipulation der Stückgüter in Kauf zu nehmen sind. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einem Verfahren und mit einer Vorrichtung zum Umgang mit in mindestens einer Reihe hintereinander bewegten Stückgütern erreicht, welche die Merkmale der unabhängigen Patentansprüche 1 bzw. 8 umfassen. Merkmale vorteilhafter Weiterbildungen der Erfindung ergeben sich aus den jeweiligen abhängigen Ansprüchen.

Bei dem erfindungsgemäßen Verfahren zum Umgang mit in mindestens einer Reihe hintereinander bewegten Stückgütern werden die Stückgüter ohne Beabstandung unmittelbar aufeinanderfolgend als geschlossene Formation in einer Transportrichtung einem ersten Handhabungsmodul mit einem ersten Manipulator zur Handhabung von Stückgütern in einem dem ersten Manipulator zugeordneten ersten Erfassungsbereich zugeführt. Die Vorrichtung umfasst wenigstens eine Transporteinrichtung, über welche unmittelbar aufeinanderfolgende Stückgüter der Reihe ohne Beabstandung als geschlossene Formation in einer Transportrichtung transportiert und dem ersten Handhabungsmodul zugeführt werden.

Mit dem Begriff der geschlossenen Formation ist eine lückenlose Aufeinanderfolge von Stückgütern gemeint, die hintereinander transportiert werden. Die geschlossene Formation kann insbesondere als Endlos- Formation transportiert werden, die keine Unterbrechung aufweist und eine beliebige Anzahl von Stückgütern umfasst.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung, durch Klebeverbindungen o. dgl. zu einem Gebinde bzw. Mischgebinde zusammengefasst sind.

Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Zumindest ein Teil der in geschlossener Formation zugeführten Stückgüter wird innerhalb des ersten Handhabungsmoduls durch einen ersten Manipulator innerhalb dessen ersten Erfassungsbereichs erfasst und in eine erste Zielposition und/oder Zielanordnung innerhalb des ersten Erfassungsbereiches verbracht. Weiterhin wird zumindest ein Teil der zugeführten Stückgüter in einem in Transportrichtung dem ersten Handhabungsmodul zumindest bereichsweise fluchtend nachgeordneten zweiten Handhabungsmodul mit einem zweiten Manipulator zur Handhabung von Stückgütern in einem dem zweiten Manipulator zugeordneten zweiten Erfassungsbereich erfasst und in eine zweite Zielposition und/oder Zielanordnung innerhalb des zweiten Erfassungsbereiches verbracht.

Wenn im Zusammenhang der vorliegenden Erfindung von einer Zielposition und/oder Zielausrichtung die Rede ist, so kann dies insbesondere bedeuten, dass die Stückgüter durch den jeweiligen Manipulator erfasst, verschoben und/oder gedreht werden können, wobei die Stückgüter wahlweise auch nur verschoben (ohne Drehung) bzw. nur gedreht (ohne Verschiebebewegung) werden können.

Wenn von einer unveränderten oder neuen Ausrichtung die Rede ist, so ist damit im Zusammenhang mit der vorliegend beschriebenen Vorrichtung insbesondere die winkelige Ausrichtung der zuvor erfassten und vom Manipulator bewegten und/oder verschobenen und/oder gedrehten Stückgüter die Rede.

Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung der Zielposition und/oder Zielausrichtung gemeint.

Gemäß der Erfindung erfasst der erste Manipulator mindestens ein Stückgut der geschlossenen Formation klemmend und/oder kraftschlüssig und/oder formschlüssig, trennt das eine erfasste Stückgut oder die Gruppe aus mindestens zwei erfassten Stückgütern von den nachfolgenden Stückgütern der geschlossenen Formation räumlich ab und verbringt das Stückgut oder die Gruppe in die erste Zielposition und/oder Zielanordnung innerhalb des ersten Erfassungsbereichs. Weiterhin ist vorgesehen, dass der zweite Manipulator mindestens ein in den zweiten Erfassungsbereich einlaufendes Stückgut oder eine Gruppe aus mindestens zwei Stückgütern innerhalb des zweiten Erfassungsbereichs klemmend und/oder kraftschlüssig und/oder formschlüssig erfasst und in eine zweite Zielposition und/oder Zielanordnung innerhalb des zweiten Erfassungsbereichs verbringt.

Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein.

Bei dem Erfassen des mindestens einen Stückgutes aus der geschlossenen Formation innerhalb des ersten Erfassungsbereichs oder nach Übertritt mindestens eines Stückgutes in den zweiten Erfassungsbereichs wird das erfasste mindestens eine Stückgut in seiner Bewegung in Transportrichtung der Stückgutreihe normalerweise nicht abgebremst. Stattdessen erhält das mindestens eine Stückgut nach dem Erfassen durch den ersten oder zweiten Manipulator der Vorrichtung mindestens eine zusätzliche Geschwindigkeits- und/oder Richtungskomponente, wobei die Geschwindigkeitskomponente nicht negativ gegenüber der Geschwindigkeit der Stückgüter in der Formation oder der in den zweiten Erfassungsbereich einlaufenden Stückgütern sein darf und die Richtungskomponente nicht entgegen der Transportrichtung der Stückgüter gerichtet sein darf. Ansonsten bestünde eine Kollisionsgefahr zwischen dem erfassten Stückgut und den nachfolgenden Stückgütern.

Gemäß einer Ausführungsform der Erfindung ist vorgesehen, dass die in den ersten Erfassungsbereich des ersten Handhabungsmoduls einlaufende geschlossene Formation und/ oder die in den zweiten Erfassungsbereich des zweiten Handhabungsmoduls einlaufenden Stückgüter sowie die in eine entsprechende Zielposition und/oder Zielanordnung verbrachten Stückgüter innerhalb des ersten Erfassungsbereiches und/oder innerhalb des zweiten Erfassungsbereiches nach Freigabe durch den jeweiligen Manipulator weiter kontinuierlich in Transportrichtung bewegt werden, insbesondere mit einer Fördergeschwindigkeit, die der Transportgeschwindigkeit der Stückgüter der geschlossenen Formation entspricht.

Insbesondere kann das Verfahren wahlweise oder zusätzlich vorsehen, dass das wenigstens eine Stückgut bei Erreichen oder unmittelbar nach Erreichen seiner Zielposition und/oder Zielausrichtung nach Freigabe durch den Manipulator ohne Unterbrechung und/oder Geschwindigkeits- und/oder Richtungsänderung weitertransportiert werden kann. Dies wird insbesondere dadurch realisiert, dass die zuführende Transporteinrichtung sowie eine erste Horizontalfördereinrichtung des ersten Handhabungsmoduls und eine zweite Horizontalfördereinrichtung des zweiten Handhabungsmoduls mit jeweils derselben Fördergeschwindigkeit und derselben Förderrichtung betrieben werden.

Alternativ kann vorgesehen sein, dass ein sich durch beide Handhabungsmodule erstreckendes Förderband abschnittsweise die Funktion der ersten Horizontalfördereinrichtung und abschnittsweise die Funktion der zweiten Horizontalfördereinrichtung übernimmt. Das Förderband kann bei entsprechender Länge zusätzlich auch die Funktion der Transporteinrichtung umfassen.

Gemäß einer Ausführungsform des Verfahrens ist vorgesehen, dass ein Teil der Stückgüter, welche im zweiten Handhabungsmodul durch den zweiten Manipulator gehandhabt und in eine zweite Zielposition und/oder Zielanordnung verbracht werden, nicht einem im ersten Handhabungsmodul gehandhabten Teil an Stückgütern entspricht. Stattdessen ist vorgesehen, dass zumindest ein Teil der Stückgüter, die im zweiten Handhabungsmodul vom zweiten Manipulator erfasst werden, das erste Handhabungsmodul in Transportrichtung durchlaufen, ohne innerhalb des ersten Handhabungsmodul direkt oder indirekt in seiner relativen Position, insbesondere relativ zu den nachlaufenden Stückgütern der geschlossenen Formation, manipuliert zu werden. Was unter indirekter Manipulation zu verstehen ist, ergibt sich insbesondere aus den nachfolgend dargestellten Beispielen.

Erfindungsgemäß ist vorgesehen, dass zumindest ein Teil der Stückgüter, welche im zweiten Handhabungsmodul durch den zweiten Manipulator gehandhabt und in eine zweite Zielposition und/oder Zielanordnung verbracht werden, einem im ersten Handhabungsmodul gehandhabten Teil an Stückgütern entspricht.

Eine Ausführungsform sieht vor, dass in mindestens einem Verfahrensschritt der erste Manipulator mindestens ein Stückgut aus der geschlossenen Formation erfasst und handhabt, welches mindestens eine Stückgut beidseitig durch weitere Stückgüter der geschlossenen Formation flankiert wird. Insbesondere sind in Transportrichtung sowohl vor als auch hinter dem mindestens einen durch den ersten Manipulator zu erfassenden Stückgut jeweils weitere Stückgüter der Formation angeordnet. D.h., der erste Manipulator erfasst bei diesem Verfahrensschritt nicht das zuvorderst angeordnete Stückgut oder eine Gruppe umfassend die mindestens zwei vordersten Stückgüter der in Transportrichtung in seinen ersten Erfassungsbereich einlaufenden Formation. Stattdessen ist vorgesehen, dass der erste Manipulator innerhalb seines ersten Erfassungsbereichs mindestens ein Stückgut mittig aus der Formation erfasst und dieses entsprechend handhabt. Dabei kann der erste Manipulator indirekt auch die in Transportrichtung vorgeordneten Stückgüter innerhalb des Erfassungsbereichs manipulieren.

Alternativ kann der erste Manipulator die erfassten Stückgüter auch derart handhaben, dass die vorauseilenden, nicht erfassten Stückgüter in ihrer Position relativ zu der geschlossenen Formation unverändert bleiben.

Erfindungsgemäß ist der erste Manipulator zum Erfassen wenigstens eines zumindest dem zuvorderst angeordneten Stückgut oder einer Mehrzahl von zuvorderst angeordneten Stückgütern der geschlossenen Formation nacheilenden Stückgutes ausgebildet. Der erste Manipulator belässt das mindestens eine zuvorderst angeordnete Stückgut ohne Erfassung und ist weiterhin zum Schieben des mindesten einen zuvorderst angeordneten, nicht vom ersten Manipulator direkt erfassten Stückgutes in eine definierte Position innerhalb des ersten Erfassungsbereichs ausgebildet. Hierbei wird das wenigstens eine vom ersten Manipulator erfasste Stückgut von der geschlossenen Formation räumlich abgetrennt.

Das Abtrennen erfolgt insbesondere dadurch, dass das erfasste Stückgut zumindest zeitweise in Transportrichtung verschoben wird, indem der Manipulator eine erhöhte Geschwindigkeit auf das erfasste Stückgut aufbringt. Insbesondere erfolgt das zumindest zeitweise Verschieben in Transportrichtung und fluchtend zur geschlossenen Formation mit einer gegenüber der geschlossenen Formation erhöhten Geschwindigkeit. Durch das Verschieben des mindestens einen erfassten Stückgutes in Transportrichtung wird zusätzlich das mindestens eine in Transportrichtung vor dem erfassten Stückgut angeordnete Stückgut gemeinsam mit diesem ebenfalls in Transportrichtung verschoben.

Das vorauseilende Stückgut wird somit innerhalb des ersten Handhabungsmoduls manipuliert und insbesondere relativ zu der geschlossenen Formation in Transportrichtung verschoben. Dabei erfolgt die Manipulation der nicht erfassten Stückgüter nur indirekt durch den ersten Manipulator, da dieser nicht direkt an dem mindestens einen nicht erfassten Stückgut angreift. Stattdessen wird die Bewegung des nicht erfassten Stückgutes in Transportrichtung durch das vom ersten Manipulator erfasste Stückgut bewirkt, dessen in Transportrichtung gerichtete Bewegung über den Kontakt zu dem mindestens einen vorauseilenden Stückgut auf dieses vorauseilende Stückgut übertragen wird.

Eine Ausführungsform, welche nicht Teil der Erfindung ist, sieht vor, dass das wenigstens eine vom ersten Manipulator erfasste Stückgut nach Verbringen des mindestens einen nicht erfassten, vorauseilenden Stückgutes in eine erste Position fluchtend zu der geschlossenen Formation in dieser ersten Position freigegeben wird. D.h. bei dieser Ausführungsform wird das mindestens eine vom Manipulator erfasste Stückgut in einer ersten Zielposition und/oder Zielanordnung angeordnet, bei der es sich weiterhin in direktem Kontakt mit dem mindesten einen vorauseilenden Stückgut befindet.

Erfindungsgemäß wird das wenigstens eine vom ersten Manipulator erfasste Stückgut nach dem indirekten Verbringen des mindestens einen nicht erfassten Stückgutes in eine erste Position durch den ersten Manipulator in eine definierte erste Zielposition und/oder Zielausrichtung verbracht und in dieser freigegeben, wobei die erste Zielposition und/oder Zielausrichtung beabstandet von der ersten Position ausgebildet ist.

Nachdem das mindestens eine vorauseilende Stückgut seine definierte erste Position innerhalb des ersten Erfassungsbereichs erreicht hat, kann der Kontakt zum nachfolgenden, vom Manipulator erfassten Stückgut gelöst werden, indem der Manipulator das erfasste Stückgut kurzzeitig in einer gegenüber der sich in Transportrichtung bewegenden ersten Horizontalfördereinrichtung reduzierten Geschwindigkeit bewegt oder festhält. Dadurch wird ein Abstand zwischen dem vom ersten Manipulator nicht erfassten aber indirekt manipulierten, insbesondere in Transportrichtung fluchtend verschobenen, Stückgut und dem nachfolgenden, vom Manipulator erfassten Stückgut ausgebildet.

Erfindungsgemäß wird das vom ersten Manipulator mindestens eine erfasste Stückgut durch den ersten Manipulator in eine erste Zielposition und/oder Zielanordnung innerhalb des ersten Erfassungsbereiches verbracht. Die erste Zielposition und/oder Zielanordnung befindet sich beispielsweise seitlich versetzt zur Formation der Stückgüter und somit auch seitlich versetzt zu den indirekt manipulierten, insbesondere verschobenen, Stückgütern. Hierbei kann vorgesehen sein, dass das mindestens eine erfasste Stückgut beim Verbringen in die erste Zielposition und/oder Zielanordnung durch den ersten Manipulator zusätzlich gedreht werden kann, so dass die Ausrichtung des mindestens einen erfassten Stückgutes in der ersten Zielposition und/oder Zielanordnung von der Ausrichtung der Stückgüter innerhalb der geschlossenen Formation abweicht.

Gemäß einer bevorzugten Ausführungsform wird aus einer Mehrzahl von Stückgütern innerhalb des ersten Erfassungsbereichs und/oder innerhalb des zweiten Erfassungsbereichs mindestens eine palettierfähige Lagenanordnung oder Stückgutlage zusammengestellt. Vorzugsweise ist vorgesehen, dass der erste Manipulator aus einer Mehrzahl von Stückgütern innerhalb des ersten Erfassungsbereichs mindestens eine erste palettierfähige Lagenanordnung oder Stückgutlage zusammengestellt. Diese Stückgutlage kann noch Lücken zwischen den Stückgütern aufweisen.

Die kompakte palettierfähige Lage wird beispielsweise nach Durchlaufen des zweiten Handhabungsmoduls in einem nachfolgenden Palettierungsmodul durch Zusammenschieben der Stückgüter vor der anschließenden Palettierung fertiggestellt. Weiterhin wird bei dieser Ausführungsform durch den zweiten Manipulator aus einer Mehrzahl von Stückgütern innerhalb des zweiten Erfassungsbereichs mindestens eine zweite palettierfähige Lagenanordnung oder Stückgutlage zusammengestellt und dem nachfolgenden Palettierungsmodul zugeführt.

Eine alternative Ausführungsform kann vorsehen, dass die Anordnung von Stückgütern durch den ersten Manipulator im ersten Handhabungsmodul und den zweiten Manipulator im zweiten Handhabungsmodul zur Ausbildung einer gemeinsamen Stückgutlage dient, die anschließend dem Palettierungsmodul zur weiteren Verarbeitung zugeführt wird.

Beispielsweise bildet das mindestens eine vom ersten Manipulator zeitweise erfasste und in eine erste Position oder in eine erste Zielposition und/oder Zielanordnung verbrachte Stückgut einen Bestandteil einer innerhalb des ersten Handhabungsmoduls ausgebildeten ersten palettierfähigen Stückgutlage. Weiterhin wird das mindestens eine vom ersten Manipulator ohne Erfassen in die erste Position mindestens eine verbrachte Stückgut nach Einlaufen in den zweiten Erfassungsbereich durch den zweiten Manipulator erfasst und in eine zweite Zielposition und/oder Zielausrichtung innerhalb des zweiten Erfassungsbereichs verbracht. Insbesondere bildet das in der zweiten Zielposition und/oder Zielanordnung angeordnete mindestens eine Stückgut einen Bestandteil einer innerhalb des zweiten Handhabungsmoduls ausgebildeten zweiten palettierfähigen Stückgutlage.

Alternativ kann vorgesehen sein, dass das mindestens eine vom ersten Manipulator erfasste Stückgut und das mindestens eine vom ersten Manipulator indirekt manipulierte, insbesondere vom ersten Manipulator nicht erfasste vorauseilende Stückgut beide Bestandteil einer innerhalb des ersten Handhabungsmoduls und zweiten Handhabungsmoduls ausgebildeten palettierfähigen Stückgutlage bilden.

Bei dem vorbeschriebenen Verfahren und der vorbeschriebenen Vorrichtung laufen die Stückgüter als lückenlose Formation in ein erstes Handhabungsmodul der Vorrichtung ein. Zumindest ein Teil der Stückgüter wird in dem ersten Handhabungsmodul gehandhabt und beispielsweise gemäß einer vorgegebenen auszubildenden Lagenanordnung in bestimmte Zielpositionen und/oder Zielanordnungen verbracht.

Gemäß einer Ausführungsform der Erfindung ist vorgesehen, dass der Manipulator, beispielsweise Roboter, Tripode o.ä., zumindest bei einigen Verfahrensschritten nicht die jeweils vordersten in das erste Handhabungsmodul einlaufenden Stückgüter erfasst und manipuliert. Stattdessen werden Stückgüter erfasst und manipuliert, denen in Transportrichtung weitere Stückgüter der geschlossenen Formation vorauseilen. Dabei können die vorauseilenden Stückgüter ebenfalls mit einer relativen Positionsänderung innerhalb des ersten Handhabungsmoduls beaufschlagt werden, wobei diese vorzugsweise indirekt erfolgt, indem eine Kraftübertragung über die vom ersten Manipulator erfassten Stückgüter auf die vom ersten Manipulator nicht erfassten Stückgüter erfolgt.

Insbesondere werden die erfassten Stückgüter in einem ersten Teil-Verfahrensschritt fluchtend in Transportrichtung verschoben und in einem zweiten Teil-Verfahrensschritt in die gewünschte Zielposition und/oder Zielanordnung verbracht. In dem ersten Teil- Verfahrensschritt werden die vorauseilenden, vom ersten Manipulator nicht erfassten Stückgüter gemeinsam mit den vom ersten Manipulator erfassten Stückgütern fluchtend in Transportrichtung verschoben.

Die Stückgüter laufen lückenlos in das erste Handhabungsmodul, insbesondere in ein erstes Gruppiermodul ein. Gemäß einer bevorzugten Ausführungsform synchronisiert sich der erste Manipulator des ersten Handhabungsmoduls nicht auf einen ersten Stückguttakt, sondern auf einen zweiten Stückguttakt auf. Die Stückgüter des ersten Taktes sind insbesondere für die Handhabung und Manipulation innerhalb eines in Transportrichtung nachgeordneten zweiten Handhabungsmoduls vorgesehen. Gegebenenfalls können bei einzelnen Verfahrensschritten die Stückgüter des ersten Taktes auch als Durchläufer vorgesehen sein, d.h. eine Handhabung und Manipulation ist innerhalb des nachgeordneten zweiten Handhabungsmoduls nicht notwendig, da die relative Positionierung und/oder Anordnung der Stückgüter bereits für die nachfolgende Weiterverarbeitung, beispielsweise Palettierung, genügt.

Vorzugsweise beschleunigt der erste Manipulator des ersten Handhabungsmoduls die erfassten Stückgüter des zweiten Taktes in Transportrichtung. Dabei werden die vorauseilenden Stückgüter des ersten Taktes ebenfalls in Transportrichtung verschoben. Nachdem ein ausreichender Abstand zu den nachfolgenden Stückgütern der geschlossenen Formation erzeugt worden ist, verbringt der erste Manipulator die erfassten Stückgüter des zweiten Taktes in eine gewünschte erste Zielposition und/oder Zielanordnung. Beispielsweise dreht der erste Manipulator die Stückgüter des erfassten zweiten Taktes von den nicht erfassten Stückgütern des ersten Taktes weg.

Gegebenenfalls ist eine kurze Verzögerung der erfassten Stückgüter des zweiten Taktes notwendig, um einen zumindest geringfügigen Abstand zwischen den Stückgütern des ersten Taktes und den Stückgütern des zweiten Taktes zu erzeugen. Dies kann insbesondere notwendig sein, um beim Verbringen der Stückgüter des zweiten Taktes in die gewünschte erste Zielposition und/oder Zielanordnung eine Kollision zwischen den Stückgütern des ersten Taktes und den Stückgütern des zweiten Taktes wirksam zu vermeiden. Dabei muss zudem der Abstand zur geschlossenen Formation beachtet werden, um auch eine Kollision mit dieser zu vermeiden.

Ein zweiter Manipulator eines in Transportrichtung nachgeordneten zweiten Handhabungsmoduls erhält die Positionsdaten der Stückgüter des innerhalb des ersten Handhabungsmoduls ausgebildeten ersten Taktes. Die in das zweite Handhabungsmodul einlaufenden Stückgüter des ersten Taktes werden durch den zweiten Manipulator erfasst und in eine definierte Zielposition und/oder Zielanordnung innerhalb des zweiten Handhabungsmoduls verbracht, insbesondere in eine zweite Zielposition und/oder Zielanordnung gemäß einer gewünschten Lagenanordnung. Die Zuführung der Stückgüter zu dem ersten Handhabungsmodul in lückenloser Formation erfolgt vorzugsweise einbahnig oder in zwei parallelen Reihen. Die vorbeschriebenen Verfahrensschritte werden in der Regel wiederholt, bis eine Mehrzahl von Stückgütern in der gewünschten Lagenanordnung angeordnet ist.

Die vorbeschriebenen Verfahrensschritte können in beliebiger Abfolge mit weiteren Verfahrensschritten kombiniert werden, in denen der erste Manipulator mindestens ein vorderstes Stückgut der einlaufenden Formation erfasst und dieses in einer Zielposition und/oder Zielanordnung gemäß dem vorgegebenen Lagenschema verbringt. Auch können einzelne Verfahrensschritte vorsehen, dass der erste Manipulator mindestens ein vorderstes Stückgut der einlaufenden Formation erfasst und dieses in einer erste Zwischenposition und/oder Zwischenanordnung verbringt und dass der zweite Manipulator das mindestens eine in der ersten Zwischenposition und/oder Zwischenanordnung angeordnete Stückgut erfasst, wenn sich dieses innerhalb seines zweiten Erfassungsbereichs befindet, so dass dieses mindestens eine Stückgut durch zweimalige direkte Handhabung und/oder Manipulation durch unterschiedliche Manipulatoren in eine gewünschte Zielposition und/oder Zielanordnung gemäß einem vorgegebenen Lagenschema verbracht wird.

Auch kann eine weitere Ausführungsform vorsehen, dass der erste Manipulator eine Gruppe umfassend mindestens zwei vorderste Stückgüter der einlaufenden Formation erfasst und dieses in einer erste Zwischenposition und/oder Zwischenanordnung verbringt. Diese erste Zwischenposition und/oder Zwischenanordnung kann für mindestens eines der Stückgüter der Gruppe die erste Zielposition und/oder Zielanordnung darstellen.

Weiterhin kann vorgesehen sein, dass der zweite Manipulator das mindestens eine andere in der ersten Zwischenposition und/oder Zwischenanordnung angeordnete Stückgut der Gruppe erfasst, insbesondere das in Transportrichtung vorauseilende Stückgut der Gruppe, wenn sich dieses innerhalb seines zweiten Erfassungsbereichs befindet, und dieses in eine gewünschte zweite Zielposition und/oder Zielanordnung gemäß einem vorgegebenen Lagenschema verbringt.

Die aus einer Mehrzahl von Stückgütern hergestellte Lagenanordnung wird vorzugsweise dadurch in ein Palettiermodul überführt, indem beispielsweise durch Zusammenschieben der Stückgüter eine kompakte palettierfähige Lage erzeugt wird. Mehrere dieser palettierfähigen Lagen werden innerhalb des Palettiermoduls auf einer Palette übereinandergestapelt, um somit größere Transporteinheiten und/oder Verkaufseinheiten zu erzeugen.

Alternativ kann vorgesehen sein, dass zumindest ein Verfahrensschritt vorsieht, dass die Manipulation und/oder die Handhabung der innerhalb des ersten Handhabungsmoduls erfassten Stückgüter ohne Auswirkungen auf die nicht erfassten vorauseilenden Stückgüter vorgenommen wird.

Die vermittels der Vorrichtung durchführbaren Verfahrensschritte werden durch eine Steuerungseinrichtung gesteuert, die die entsprechenden Informationen zu den vermittels des ersten Manipulators und des zweiten Manipulators durchzuführenden Verfahrensschritten umfasst. Hierfür ist gemäß einer Ausführungsform vorgesehen, dass die Steuerungseinrichtung mit dem ersten Manipulator und dem zweiten Manipulator elektronisch gekoppelt ist.

Eine alternative Ausführungsform kann vorsehen, dass die Steuerungseinrichtung eine zentrale Steuerungseinrichtung ist, die mit einer dem ersten Manipulator zugeordneten ersten Steuereinheit und mit einer dem zweiten Manipulator zugeordneten zweiten Steuereinheit gekoppelt ist. Insbesondere übermittelt die Steuerungseinrichtung die entsprechenden Informationen an die erste Steuereinheit, die daraufhin den ersten Manipulator entsprechend ansteuert und/oder die Steuerungseinrichtung übermittelt die entsprechenden Informationen an die zweite Steuereinheit, die daraufhin den zweiten Manipulator entsprechend ansteuert.

Es kann vorgesehen sein, dass die Vorrichtung eines oder mehrere der folgenden Module umfasst: eine Blasformmodul zum Streckblasen von PET-Behältern, einen Füllmodul zum Befüllen von Behältern, einen Verschließermodul zum Verschließen von befüllten Behältern, ein Etikettiermodul zum Etikettieren von Behältern, ein Etikettieraggregat, welches einem Etikettiermodul zugeordnet ist, ein Schrumpfmodul zum Herstellen von Schrumpfgebinden umfassend eine Mehrzahl von Behältern, eine Kühleinrichtung zum Kühlen einer Fördereinrichtung der Vorrichtung oder eine Kühleinrichtung zum Kühlen einer Fördereinrichtung eines Schrumpfmoduls.

Mit dem hier beschriebenen Verfahren und der zuvor beschriebenen Vorrichtung können nunmehr auch lückenlos zugeführte Stückgüter in mehreren nacheinander angeordneten Handhabungsmodulen bearbeitet werden. Dies war bisher nicht möglich, da alle vorbeschriebenen Handhabungssysteme immer die vordersten zugeführten Stückgüter abgegriffen und gehandhabt haben und keine Verarbeitung von Stückgütern in einem nachfolgenden Handhabungsmodul erfolgt ist.

Mit dem hier beschriebenen Verfahren und der Vorrichtung können die Taktzeiten bei der Verarbeitung der Stückgüter vermindert und die Produktionsleistung erhöht werden.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1 bis 9 zeigen schematisch einen zeitlichen Ablauf eines erfindungsgemäßen Verfahrens zum Umgang mit in mindestens einer Reihe hintereinander bewegten Stückgütern durch eine entsprechende Handhabungsvorrichtung in einer Darstellung von oben.

Figuren 10 bis 14 zeigen schematisch einen zeitlichen Ablauf eines erfindungsgemäßen Verfahrens zum Umgang mit in mindestens einer Reihe hintereinander bewegten Stückgütern durch eine entsprechende Handhabungsvorrichtung analog zu den Figuren 1 bis 9 in einer seitlichen Darstellung.

Figuren 15 bis 20 zeigen schematisch einen zeitlichen Ablauf einer weiteren Ausführungsform eines nicht erfindungsgemäßen Verfahrens zum Umgang mit in mindestens einer Reihe hintereinander bewegten Stückgütern durch eine entsprechende Handhabungsvorrichtung in einer Darstellung von oben.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

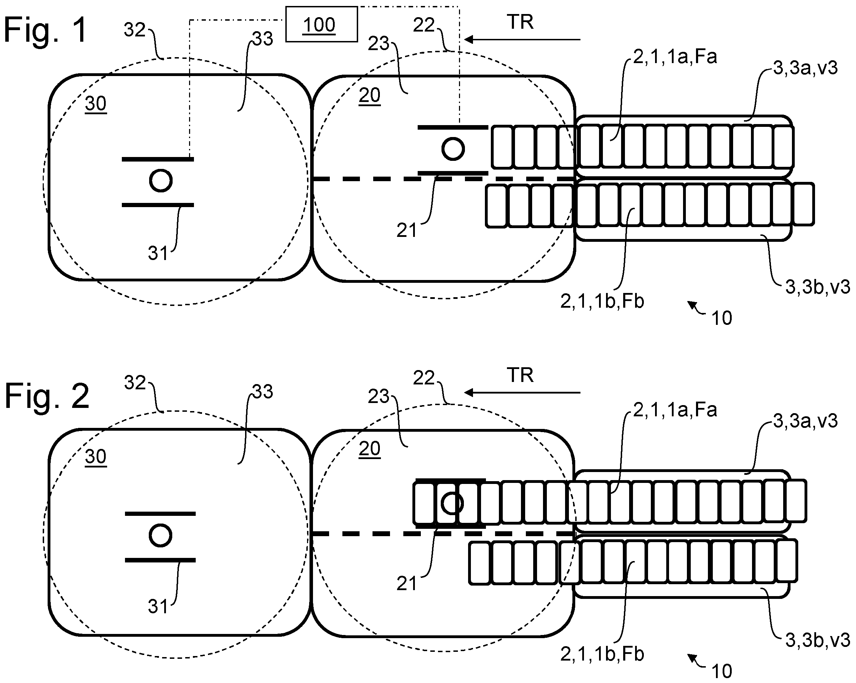

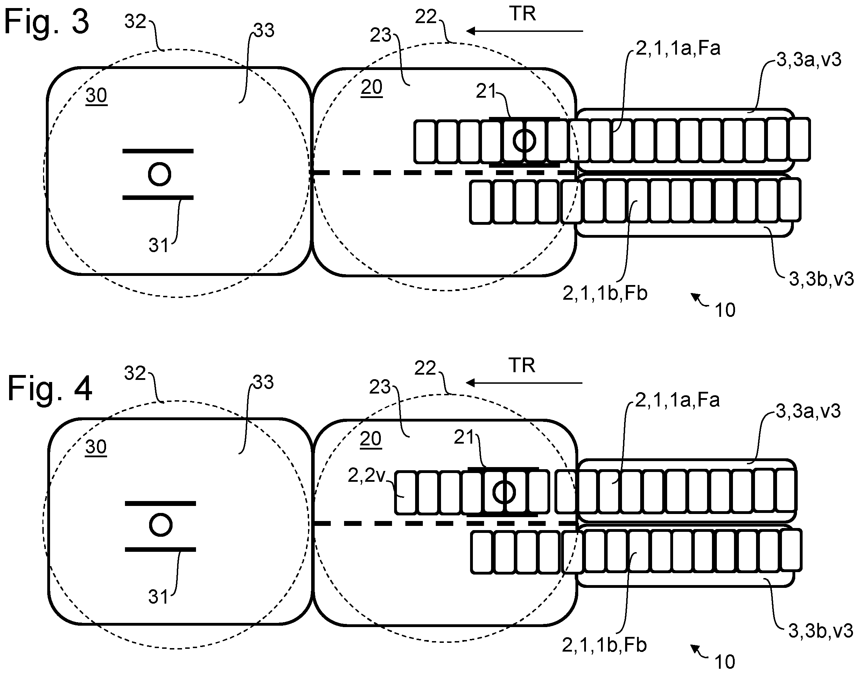

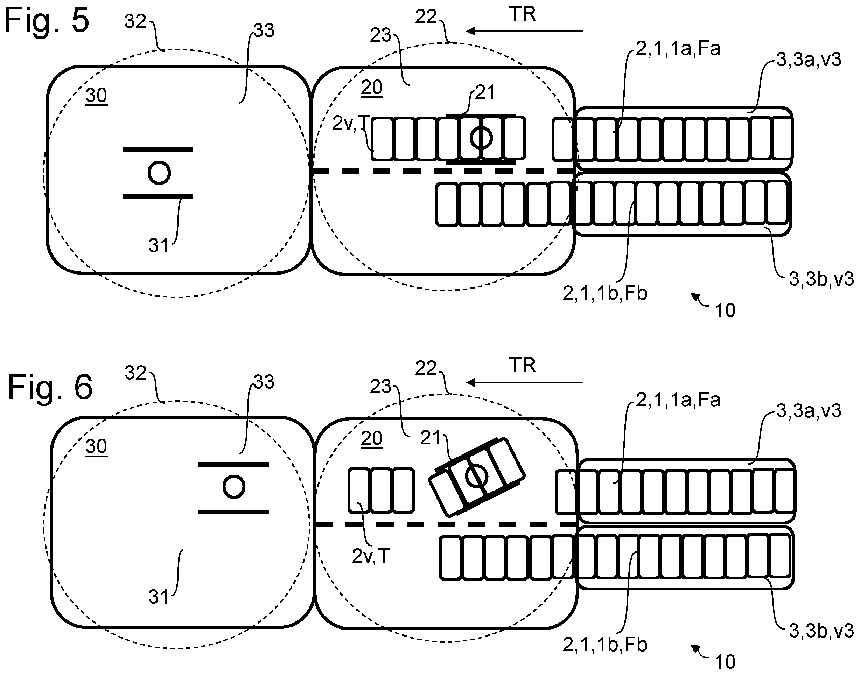

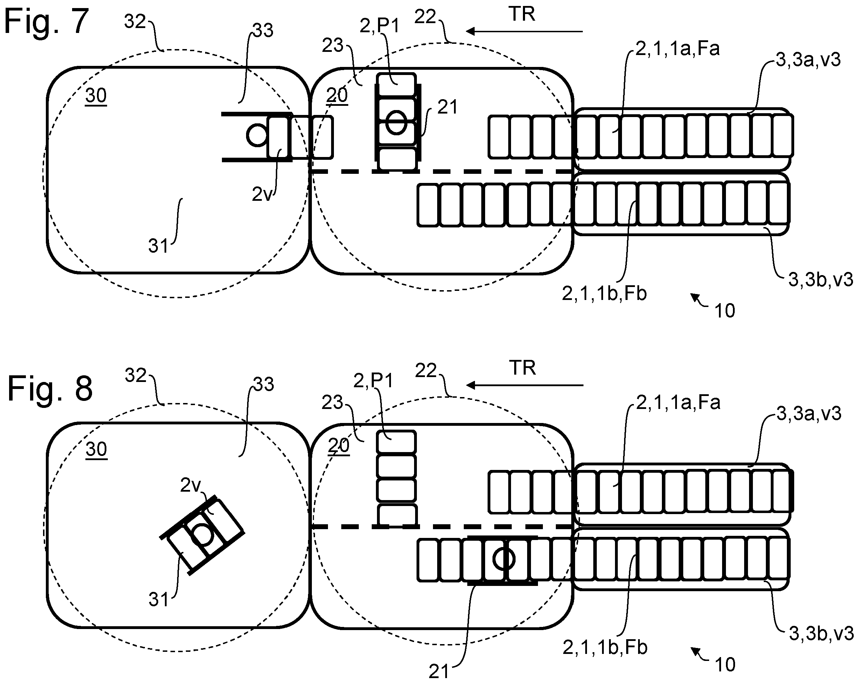

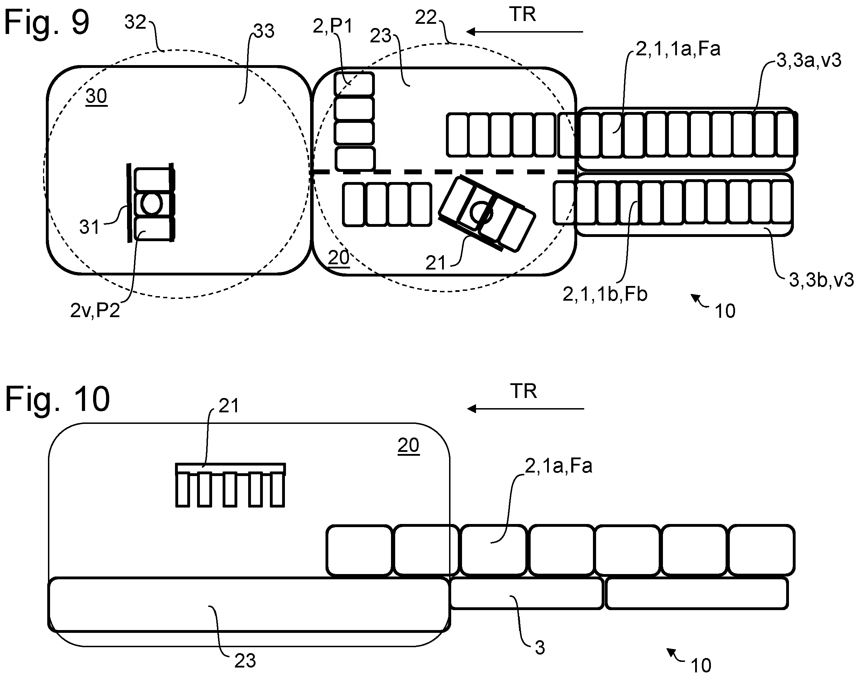

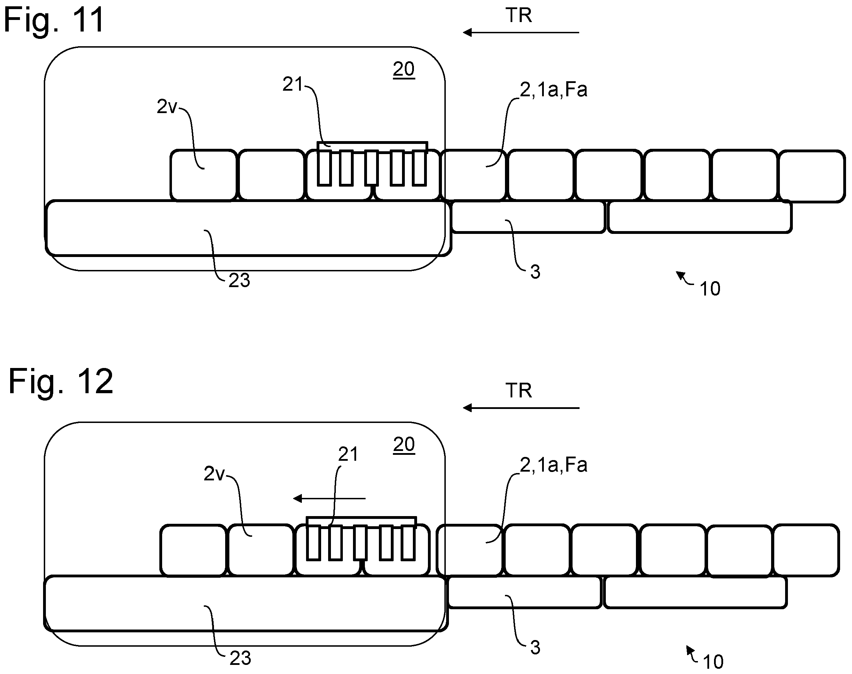

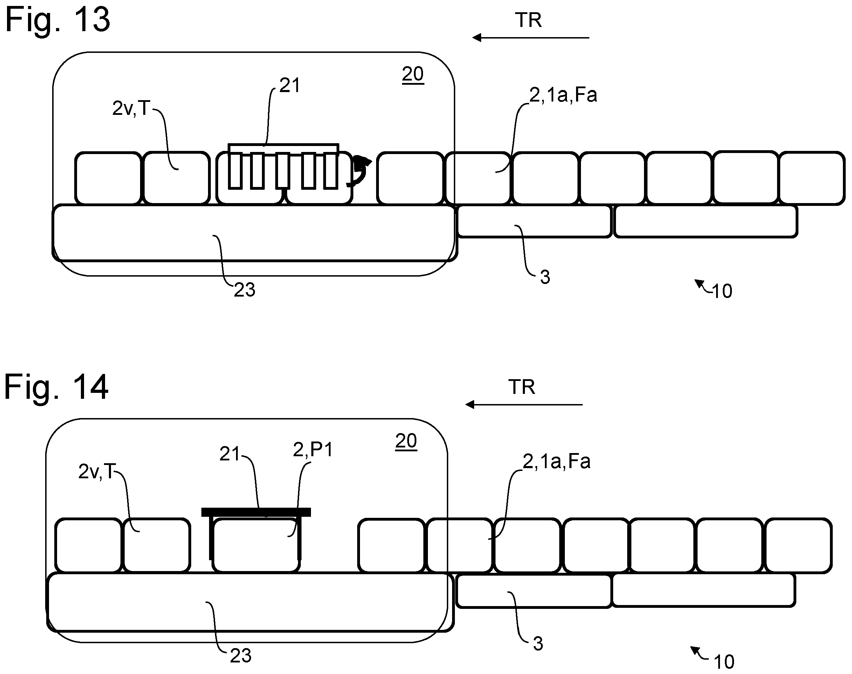

Die Figuren 1 bis 9 zeigen schematisch einen zeitlichen Ablauf eines erfindungsgemäßen Verfahrens zum Umgang mit in mindestens einer Reihe 1 hintereinander bewegten Stückgütern 2 durch eine entsprechende Handhabungsvorrichtung 10 in einer Darstellung von oben, während die Figuren 10 bis 15 in schematischer Weise einen zeitlichen Ablauf eines erfindungsgemäßen Verfahrens analog zu den Figuren 1 bis 9 in einer seitlichen Darstellung zeigen. Dabei entspricht der in Fig. 10 dargestellte Verfahrensschritt dem in Fig. 1 dargestellten Verfahrensschritt; Fig. 11 entspricht Fig. 3, Fig. 12 entspricht Fig. 4, Fig. 13 entspricht annähernd Fig. 6 und Fig. 14 entspricht Fig. 7.

Die Handhabungsvorrichtung 10 umfasst mindestens eine erste Transporteinrichtung 3 zur Zuführung der Stückgüter 2. Gemäß der in den Figuren 1 bis 9 dargestellten Ausführungsform der Handhabungsvorrichtung 10 sind zwei parallel angeordnete Transporteinrichtungen 3, 3a, 3b vorgesehen, über welche unmittelbar aufeinanderfolgende Stückgüter 2 in zwei parallelen Reihen 1, 1a, 1b unterbrechungsfrei und/oder mit kontinuierlicher Transportgeschwindigkeit v3 in einer Transportrichtung TR als sogenannte geschlossene Formation F, Fa, Fb zugeführt werden. Gemäß der in den Figuren 10 bis 14 dargestellten Ausführungsform der Handhabungsvorrichtung 10 ist beispielsweise nur eine Transporteinrichtungen 3 vorgesehen.

Die Transporteinrichtungen 3, 3a, 3b können beispielsweise jeweils durch ein Förderband oder eine andere geeignete Fördereinrichtung gebildet sein, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke oder Abstand besteht.

Weiterhin umfasst die Handhabungsvorrichtung 10 ein erstes Gruppiermodul 20 und ein in Transportrichtung TR fluchtend hinter dem ersten Gruppiermodul 20 angeordnetes zweites Gruppiermodul 30. In den Figuren 10 bis 14 ist nur das erste Gruppiermodul 20 dargestellt. Jedes der beiden Gruppiermodule 20, 30 ist mit einem bewegbaren, verschiebbaren und/oder rotierbaren Manipulator ausgestattet. Insbesondere umfasst das erste Gruppiermodul 20 einen ersten Manipulator 21 und das zweite Gruppiermodul 30 einen zweiten Manipulator 31.

Den Manipulatoren 21, 31 ist innerhalb der Gruppiermodule 20, 30 jeweils ein Erfassungsbereich zugeordnet, ein erster Erfassungsbereich 22 des ersten Manipulators 21 und ein zweiter Erfassungsbereich 32 des zweiten Manipulators 31. Zumindest ein Teil der Stückgüter 2 wird innerhalb des ersten Erfassungsbereiches 22 durch den ersten Manipulator 21 erfasst, von den nachfolgenden Stückgütern 2 der geschlossenen Formation F, Fa, Fb räumlich abgetrennt und in eine erste Zielposition und/oder Zielanordnung P1 innerhalb des ersten Erfassungsbereichs 22 verbracht. Weiterhin wird zumindest ein Teil der Stückgüter 2 in dem zweiten Erfassungsbereich 32 durch den zweiten Manipulator 31 erfasst und in eine zweite Zielposition und/oder Zielanordnung P2 innerhalb des zweiten Erfassungsbereiches 32 verbracht.

Gemäß den dargestellten Ausführungsformen der Figuren 1 bis 9 und 10 bis 14 werden die Stückgüter 2 jeweils über die Transporteinrichtung(en) 3, 3a, 3 zu dem ersten Erfassungsbereich 22 transportiert. Das erste Gruppiermoduls 20 umfasst eine erste Horizontalfördereinrichtung 23, die wie die Transporteinrichtung 3 beispielsweise durch ein Endlosförderband gebildet wird. Die in mindestens einer Reihe 1 über die mindestens eine Transporteinrichtung 3 zugeführten Stückgüter 2 werden durch den Staudruck der nachfolgenden Stückgüter 2 auf die erste Horizontalfördereinrichtung 23 übergeschoben und dort unterbrechungsfrei weiterbefördert.

Insbesondere werden die von der ersten Transporteinrichtung 3 in den ersten Erfassungsbereich 22 einlaufenden Stückgüter 2 über die erste

Horizontalfördereinrichtung 23 weiter in Transportrichtung TR bewegt. Vorzugsweise werden die Stückgüter 2 durch die erste Horizontalfördereinrichtung 23 kontinuierlich und lückenlos mit einer Geschwindigkeit weitergeführt, die der Transportgeschwindigkeit v3 der Transporteinrichtung(en) 3, 3a, 3b entspricht.

Zumindest der erste Manipulator 21 des ersten Gruppiermoduls 20, insbesondere jedoch beide Manipulatoren 21, 31, ist/sind zum klemmenden und/oder kraftschlüssigen und/oder formschlüssigen Entgegennehmen von Stückgütern 2 innerhalb des jeweiligen Erfassungsbereichs 22, 32 ausgebildet. Wie in den Figuren 3 und 11 dargestellt ist, erfasst der erste Manipulator 21 Stückgüter 2 aus einer Reihe 1, 1a, 1b an lückenlos in den ersten Erfassungsbereich 22 zugeführten Stückgütern 2.

Hierbei ist vorgesehen, dass in zumindest einem Verfahrensschritt der erste Manipulator 21 nicht die vordersten Stückgüter 2 der Reihe 1, 1a, 1b erfasst, sondern an Stückgütern 2 der mindestens einen Reihe 1, 1a, 1b angreift, die in Transportrichtung TR mindesten einem in Transportrichtung TR vorauseilenden Stückgut 2, 2v der Reihe 1, 1a, 1b nachfolgen. Das mindestens eine dem erfassten Stückgut 2 vorauseilende Stückgut 2 wird nachfolgend mit dem Bezugszeichen 2v gekennzeichnet. Durch eine Bewegung des ersten Manipulators 21 in Transportrichtung TR mit einer gegenüber der ersten Horizontalfördereinrichtung 23 erhöhten Geschwindigkeit, werden die erfassten Stückgüter 2 sowie zusätzlich die in Transportrichtung TR fluchtend vor den erfassten Stückgütern 2 angeordneten, vorauseilenden Stückgüter 2v gemeinsam in Transportrichtung TR verschoben.

Die vom ersten Manipulator 21 erfassten Stückgüter 2 sowie die in Transportrichtung TR vorauseilenden Stückgüter 2v werden von den nachfolgenden Stückgütern 2 der Formation F räumlich abgetrennt. Die vom ersten Manipulator erfassten Stückgüter 2 dienen dem Verschieben des mindestens eines weiteren in Transportrichtung vorauseilenden Stückgutes 2v der Reihe 1, 1a, 1b (vergleiche Figuren 4 und 12). Das wenigstens eine vom ersten Manipulator 21 nicht erfasste vorauseilende Stückgut 2v wird in eine erste Position T innerhalb des ersten Erfassungsbereichs 22 geschoben, wobei das Verschieben des mindestens einen vorauseilenden Stückgutes 2v zumindest zeitweise gemeinsam mit dem mindesten einen vom ersten Manipulator 21 erfassten Stückgut 2 erfolgt.

Anschließend werden die durch den ersten Manipulator 21 erfassten Stückgüter 2 in eine gewünschte erste Zielposition und/oder Zielanordnung P1 innerhalb des ersten Erfassungsbereichs 22 des ersten Manipulators 21 des ersten Gruppiermoduls 20 gebracht. Dabei kann beispielsweise eine Drehbewegung des ersten Manipulators 21 um eine vorzugsweise in etwa vertikale Achse erfolgen, so dass das vom ersten Manipulator 21 erfasste Stückgut 2 oder die Gruppe aus mindestens zwei Stückgütern 2 entsprechend gedreht wird.

Gemäß den Figuren 6 und 7 sowie 13 und 14 erfolgt insbesondere eine Drehung um 90 Grad, so dass die in der ersten Zielposition und/oder Zielanordnung P1 vom ersten Manipulator 21 freigegebenen Stückgüter 2 eine um 90 Grad gedrehte Ausrichtung gegenüber den nachfolgenden Stückgütern 2 der geschlossenen Formation F aufweisen. Alternativ kann beispielsweise ein seitliches Verschieben des durch den ersten Manipulator 21 mindestens einen erfassten Stückgutes 2 vorgesehen sein, so dass die in der ersten Zielposition und/oder Zielanordnung P1 vom ersten Manipulator 21 freigegebenen Stückgüter 2 zwar dieselbe Ausrichtung wie die Stückgüter 2 der geschlossenen Formation F beibehalten, jedoch sich nicht mehr fluchtend zu den nachfolgenden Stückgütern 2 der geschlossenen Formation F bewegen.

Es ist also vorgesehen, dass die mittels des ersten Manipulators 21 erfassten Stückgüter 2 ohne zwischenzeitliches Freigeben durch den ersten Manipulator 21 direkt in eine jeweiligen erste Zielposition und/oder Zielausrichtung P1 verbracht werden.

Während der Positionierung der vom ersten Manipulator 21 erfassten Stückgüter 2 und der vorauseilenden Stückgüter 2v in der ersten Position T werden die zuführende Transporteinrichtung 3 und die erste Horizontalfördereinrichtung 23 weiterhin konstant betrieben. Die Geschwindigkeit v3 ist dabei so gewählt, dass der erste Manipulator 21 innerhalb des ihm zur Verfügung stehenden Arbeitsbereichs, insbesondere innerhalb seines ersten Erfassungsbereichs 22, ausreichend Zeit hat, um die Stückgüter 2 und/oder handzuhaben und zu verschieben. Bevorzugt besteht der erste Manipulator 21 aus einem Deltakinematik-Roboter, einem Tripod o.ä., um hoch dynamische Verschiebebewegungen zu realisieren und möglichst schnelle Taktzeiten zu ermöglichen.

Die vom ersten Manipulator 21 nicht erfassten Stückguter 2v, die den erfassten Stückgütern 2 vorauseilen und somit gemeinsam mit diesen in Transportrichtung TR in die erste Position T verschoben worden sind, werden während des Verbringens der erfassten Stückgüter 2 in die erste Zielposition und/oder Zielanordnung P1 gemäß Figuren 6 und 7 sowie 13 und 14 sowie im Anschluss daran über die erste Horizontalfördereinrichtung 23 kontinuierlich weiter in Transportrichtung TR bewegt. Insbesondere werden diese vorauseilenden Stückgüter 2v fluchtend zu der Reihe 1 der Stückgüter 2 auf der Transporteinrichtung 3 dem zweiten Gruppiermodul 30 zugeführt und gelangen somit in den zweiten Erfassungsbereich 32 des zweiten Manipulators 31 (Fig. 7).

Mindestens eines der vorauseilenden Stückgüter 2 oder die Gruppe der vorauseilenden Stückgüter 2 wird/werden innerhalb des zweiten Erfassungsbereichs 32 durch den zweiten Manipulator 31 erfasst und in eine zweite Zielposition und/oder Zielanordnung P2 innerhalb des zweiten Gruppiermoduls verbracht (Fig. 9). Auch in diesem Zusammenhang werden während der Positionierung der vom zweiten Manipulator 31 erfassten Stückgüter 2 und parallel zu der Positionierung weiterer Stückgüter 2 durch den ersten Manipulator 21 innerhalb des ersten Gruppiermoduls 20 die zuführende Transporteinrichtung 3, die erste Horizontalfördereinrichtung 23 und die zweite Horizontalfördereinrichtung 33 weiterhin konstant betrieben. Die Geschwindigkeit v3 ist dabei so gewählt, dass beide Manipulatoren 21, 31 innerhalb der ihnen zur Verfügung stehenden Arbeitsbereiche ausreichend Zeit haben, um die Stückgüter 2 entsprechend handzuhaben und/oder zu verschieben etc.

Vorzugsweise ist vorgesehen, dass der erste Manipulator 21 aus einer Mehrzahl von Stückgütern 2 innerhalb des ersten Erfassungsbereichs 22 mindestens eine erste palettierfähige Lagenanordnung oder Stückgutlage zusammengestellt. Diese Stückgutlage kann noch Lücken zwischen den Stückgütern 2 aufweisen, die nach Durchlaufen des zweiten Gruppiermoduls 30 in einem nachfolgenden Palettierungsmodul (nicht dargestellt) durch Zusammenschieben der Stückgüter vor der anschließenden Palettierung als kompakte Lage fertiggestellt wird.

Weiterhin wird durch den zweiten Manipulator 31 aus einer Mehrzahl von Stückgütern 2 innerhalb des zweiten Erfassungsbereichs 32 mindestens eine zweite palettierfähige Lagenanordnung oder Stückgutlage zusammengestellt und dem nachfolgenden Palettierungsmodul zugeführt.

Eine alternative Ausführungsform kann vorsehen, dass die Anordnung von Stückgütern 2 durch den ersten Manipulator 21 im ersten Gruppiermodul 20 und den zweiten Manipulator 31 im zweiten Gruppiermodul 30 zur Ausbildung einer gemeinsamen Stückgutlage dient, die anschließend dem Palettierungsmodul zur weiteren Verarbeitung zugeführt wird.

In Fig. 1 ist weiterhin eine Steuerungseinrichtung 100 dargestellt, die mit dem ersten Manipulator 21 und dem zweiten Manipulator 31 elektronisch gekoppelt ist und Informationen zu den vermittels des ersten Manipulators 21 und des zweiten Manipulators 31 durchzuführenden Verfahrensschritten umfasst und diese entsprechend ansteuert.

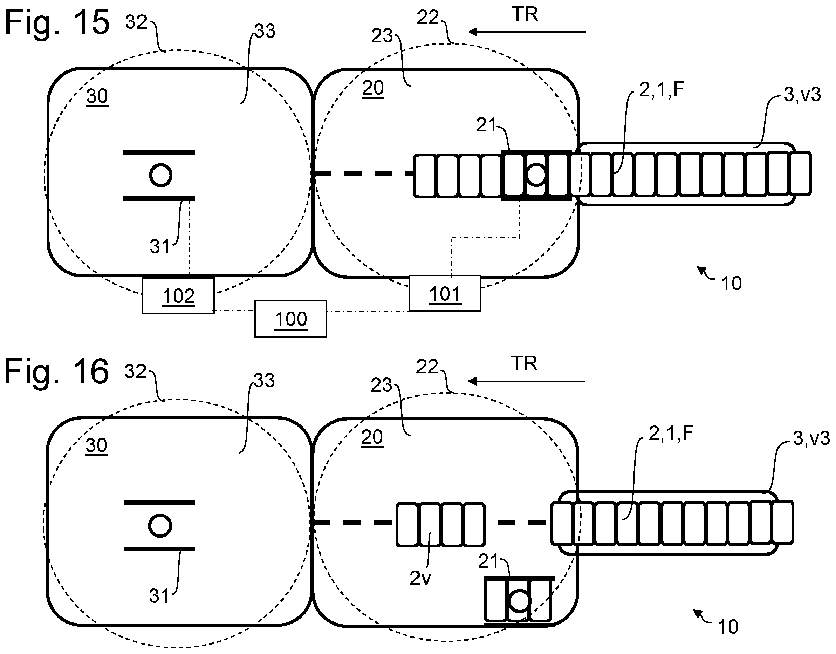

Die Figuren 15 bis 20 zeigen schematisch einen zeitlichen Ablauf einer Ausführungsform eines nicht erfindungsgemäßen Verfahrens zum Umgang mit in mindestens einer Reihe 1 hintereinander bewegten Stückgütern 2 durch eine entsprechende Handhabungsvorrichtung 10 in einer Darstellung von oben. Hier erfolgt die Zuführung von Stückgütern 2 über eine Transporteinrichtung 3 als lückenlose Formation F in einer Reihe 1.

Der erste Manipulator 21 des ersten Gruppiermoduls 20 erfasst drei Stückgüter 2 aus der Formation F (Fig. 15) und verschiebt diese seitlich aus der geschlossenen Formation F heraus, so dass zwischen der geschlossenen Formation F und den Stückgütern 2v, die den erfassten Stückgütern 2 vorauseilend, eine Lücke ausgebildet wird (Fig. 16).

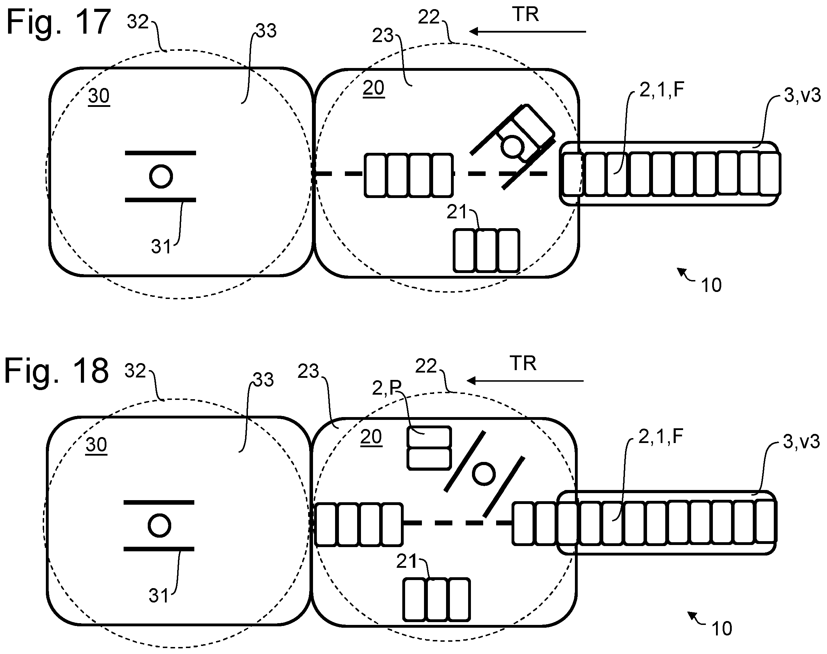

Die vorauseilenden Stückgüter 2v bewegen sich hierbei kontinuierlich in Transportrichtung TR in Richtung des zweiten Gruppiermoduls 30, insbesondere werden die vorauseilenden Stückgüter 2v kontinuierlich mit der Fördergeschwindigkeit der ersten Horizontalfördereinrichtung 23 bewegt. Nun erfasst der erste Manipulator 21 zwei weitere Stückgüter 2 der in das erste Gruppiermodul 20 einlaufenden geschlossenen Formation F und trennt diese Stückgüter 2 von der geschlossenen Formation F ab, wobei der erste Manipulator 21 die beiden erfassten Stückgüter 2 zusätzlich um 90 Grad dreht und in eine Zielposition und/oder Zielanordnung P seitlich zur Flucht der geschlossenen Formation F und seitlich zu den im ersten Verfahrensschritt nicht erfassten in Transportrichtung TR vorauseilenden Stückgütern 2v verbringt (Figuren 17 und 18).

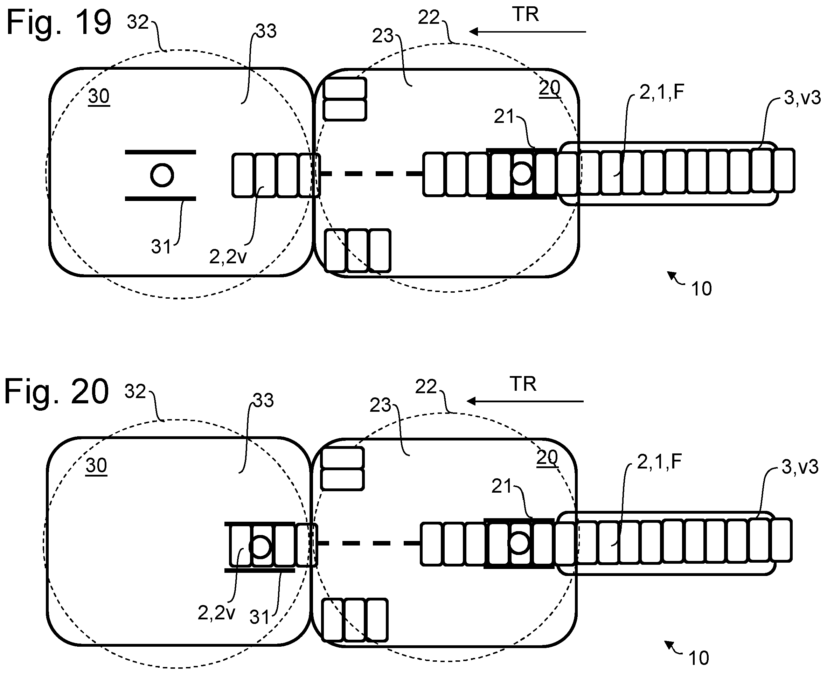

Durch die kontinuierliche Bewegung der ersten Horizontalfördereinrichtung 23, werden die vorauseilenden Stückgüter 2v dem zweiten Gruppiermodul 30 zugeführt und gelangen somit in den zweiten Erfassungsbereich 32 des zweiten Manipulators 31. Der zweite Manipulator 31 erfasst mindestens eines der vorauseilenden Stückgüter 2v (Fig. 20), um dieses bzw. die Gruppe aus mindestens zwei vorauseilenden Stückgütern 2v gemäß einem vorgegebenen Lagenschema in eine Zielposition und/oder Zielanordnung innerhalb des zweiten Erfassungsbereiches 32 zu verbringen (nicht dargestellt).

Bei dieser Ausführungsform werden im zweiten Gruppiermodul 30 somit zumindest teilweise Stückgüter 2 gehandhabt und manipuliert, die das erste Gruppiermodul 20 nur fluchtend zur geschlossenen Formation F in Transportrichtung TR durchlaufen. Insbesondere werden bei den hier dargestellten Verfahrensschritten die im zweiten Gruppiermodul 30 gehandhabten Stückgüter 2 nicht durch den ersten Manipulator 21 in direkter oder indirekter Weise innerhalb des ersten Gruppiermoduls 20 manipuliert.

In Fig. 15 ist weiterhin eine zentrale Steuerungseinrichtung 100 dargestellt, die mit weiteren Steuerungseinheiten der Vorrichtung 10 gekoppelt ist, insbesondere mit einer dem ersten Manipulator 21 zugeordneten ersten Steuereinheit 101 und mit einer dem zweiten Manipulator 31 zugeordneten zweiten Steuereinheit 102. Insbesondere übermittelt die zentrale Steuerungseinrichtung 100 die entsprechenden Informationen an die erste Steuereinheit 101, die daraufhin den ersten Manipulator 21 entsprechend ansteuert und/oder die Steuerungseinrichtung 100 übermittelt die entsprechenden Informationen an die zweite Steuereinheit 102, die daraufhin den zweiten Manipulator 31 entsprechend ansteuert.

In den genannten Ausführungsformen können im zweiten Gruppiermodul 30 Stückgüter 2 gehandhabt werden, die das erste Gruppiermodul 20 ohne Manipulation durchlaufen haben oder die im ersten Gruppiermodul 20 durch nachlaufende Stückgüter 2 und somit indirekt durch den ersten Manipulator 21 fluchtend in Transportrichtung TR verschoben worden sind.

Weiterhin ist es möglich, dass zumindest ein Teil der Stückgüter 2 sowohl im ersten Gruppiermodul 20 durch den ersten Manipulator 21 in eine erste Zwischenposition und/oder Zwischenanordnung verbracht und anschließend im zweiten Gruppiermodul 30 durch den zweiten Manipulator 31 in eine Zielposition und/oder Zielanordnung gemäß einem vorgegebenen Lagenschema verbracht werden (nicht dargestellt).

Auch wenn im Zusammenhang mit der Figurenbeschreibung jeweils Gruppiermodule 20, 30 zur Herstellung von palettierfähigen Stückgutlagen beschrieben worden sind, so können stattdessen auch Drehsysteme und/oder Verteilsysteme in entsprechender Weise bedient werden.

Die Erfindung wurde unter Bezugnahme auf eine bevorzugte Ausführungsform beschrieben. Es ist jedoch für einen Fachmann vorstellbar, dass Abwandlungen oder Änderungen gemacht werden können, sofern sie den Schutzbereich der nachstehenden Ansprüche nicht verlassen.

### Bezugszeichenliste

- 1,1a,1b: Reihe
- 2: Stückgut
- 2v: vorauseilendes Stückgut
- 3,3a,3b: Transporteinrichtung
- 10: Handhabungsvorrichtung
- 20: erstes Gruppiermodul
- 21: erster Manipulator
- 22: erster Erfassungsbereich
- 23: erste Horizontalfördereinrichtung
- 30: zweites Gruppiermodul
- 31: zweiter Manipulator
- 32: zweiter Erfassungsbereich
- 33: zweite Horizontalfördereinrichtung
- 100: Steuerungseinrichtung
- 101: erste Steuerungseinheit
- 102: zweite Steuerungseinheit

- F,Fa,Fb: geschlossene Formation
- T: erste Position
- P: Zielposition und/oder Zielanordnung
- P1: erste Zielposition und/oder Zielanordnung
- P2: zweite Zielposition und/oder Zielanordnung
- TR: Transportrichtung
- v3: Transportgeschwindigkeit

## Patentansprüche

1. Verfahren zum Umgang mit in mindestens einer Reihe (1) hintereinander bewegten Stückgütern (2), wobei
- die Stückgüter (2) ohne Beabstandung unmittelbar aufeinanderfolgend als geschlossene Formation (F) in einer Transportrichtung (TR) einem ersten Handhabungsmodul (20) mit einem ersten Manipulator (21) zur Handhabung von Stückgütern (2) in einem dem ersten Manipulator (21) zugeordneten ersten Erfassungsbereich (22) zugeführt werden;
- wobei zumindest ein Teil der in geschlossener Formation (F) zugeführten Stückgüter (2) im ersten Handhabungsmodul (20) durch den ersten Manipulator (21) erfasst und in eine erste Zielposition und/oder Zielanordnung (P1) innerhalb des ersten Erfassungsbereiches (22) verbracht wird;
- wobei der erste Manipulator (21) mindestens ein Stückgut (2) der geschlossenen Formation (F) klemmend und/oder kraftschlüssig und/oder formschlüssig erfasst, von den nachfolgenden Stückgütern (2) der geschlossenen Formation (F) räumlich abtrennt und in die erste Zielposition und/oder Zielanordnung (P1) innerhalb des ersten Erfassungsbereichs (22) verbringt,
- und wobei zumindest ein Teil der zugeführten Stückgüter (2) in einem in Transportrichtung (TR) dem ersten Handhabungsmodul (20) zumindest bereichsweise fluchtend nachgeordneten zweiten Handhabungsmodul (30) mit einem zweiten Manipulator (31) zur Handhabung von Stückgütern (2) in einem dem zweiten Manipulator (31) zugeordneten zweiten Erfassungsbereich (32) durch den zweiten Manipulator (31) erfasst und in eine zweite Zielposition und/oder Zielanordnung (P2) innerhalb des zweiten Erfassungsbereiches (32) verbracht wird,
- wobei ein im ersten Handhabungsmodul (20) gehandhabter erster Teil an Stückgütern (2) zumindest teilweise einen im zweiten Handhabungsmodul (30) gehandhabten zweiten Teil an Stückgütern (2) umfasst,
- wobei durch den ersten Manipulator (21) wenigstens ein Stückgut (2) aus der geschlossenen Formation (F) erfasst, von der geschlossenen Formation (F) räumlich abgetrennt und in eine definierte relative Zielposition und/oder Zielausrichtung (P1) gegenüber nachfolgenden Stückgütern (2) gebracht wird, **dadurch gekennzeichnet, dass**
- dem wenigstens einen erfassten Stückgut (2) mindestens ein weiteres durch den ersten Manipulator (21) nicht erfasstes Stückgut (2) der geschlossenen Formation (F) vorauseilt, welches mit dem wenigstens einen erfassten Stückgut (2) zeitweise gemeinsam in eine erste Position (T) innerhalb des ersten Erfassungsbereichs (22) geschoben wird,
- wobei das wenigstens eine vom ersten Manipulator (21) erfasste Stückgut (2), nach Verbringen des mindestens einen nicht erfassten Stückgutes (2) durch den ersten Manipulator (21) in die erste Position (T), durch den Manipulator (21) in die erste Zielposition und/oder Zielausrichtung (P1) verbracht und in dieser freigegeben wird, wobei die erste Zielposition und/oder Zielausrichtung (P1) beabstandet zu der ersten Position (T) ausgebildet ist.

2. Verfahren nach dem Anspruch 1, wobei der zweite Manipulator (31) mindestens ein in den zweiten Erfassungsbereich (32) einlaufendes Stückgut (2) innerhalb des zweiten Erfassungsbereichs (32) klemmend und/oder kraftschlüssig und/oder formschlüssig erfasst und in eine zweite Zielposition und/oder Zielanordnung (P2) innerhalb des zweiten Erfassungsbereichs (32) verbringt.

3. Verfahren nach dem Anspruch 1 oder 2, wobei die in eine Zielposition und/oder Zielanordnung verbrachten Stückgüter (2) innerhalb des ersten Erfassungsbereiches (22) und/oder innerhalb des zweiten Erfassungsbereiches (32) weiter kontinuierlich in Transportrichtung (TR) bewegt werden, insbesondere mit einer Fördergeschwindigkeit, die der Transportgeschwindigkeit (v3) der Stückgüter (2) der geschlossenen Formation (F) entspricht.

4. Verfahren nach einem der voranstehenden Ansprüche, wobei ein im zweiten Handhabungsmodul (30) gehandhabter Teil an Stückgütern (2) nicht einem im ersten Handhabungsmodul (20) gehandhabten Teil an Stückgütern (2) entspricht.

5. Verfahren nach einem der voranstehenden Ansprüche, wobei aus einer Mehrzahl von Stückgütern (2) innerhalb des ersten Erfassungsbereichs (22) und/oder innerhalb des zweiten Erfassungsbereichs (32) mindestens eine palettierfähige Lagenanordnung oder Stückgutlage zusammengestellt wird.

6. Verfahren nach einem der voranstehenden Ansprüche, wobei das in der ersten Position (T) oder ersten Zielposition und/oder Zielanordnung (P1) angeordnete mindestens eine Stückgut (2) einen Bestandteil einer innerhalb des ersten Handhabungsmoduls (20) ausgebildeten ersten palettierfähigen Stückgutlage bildet und/oder wobei das in der ersten Position (T) angeordnete mindestens eine nicht vom ersten Manipulator (21) erfasste Stückgut (2) nach Einlaufen in den zweiten Erfassungsbereich (32) durch den zweiten Manipulator (31) erfasst und in eine zweite Zielposition und/oder Zielausrichtung (P2) innerhalb des zweiten Erfassungsbereichs (32) verbracht wird, wobei das in der zweiten Zielposition und/oder Zielanordnung (P2) angeordnete mindestens eine Stückgut (2) einen Bestandteil einer innerhalb des zweiten Handhabungsmoduls (30) ausgebildeten zweiten palettierfähigen Stückgutlage bildet.

7. Verfahren nach einem der Ansprüche 1 bis 6, wobei das mindestens eine vom ersten Manipulator (21) erfasste Stückgut (2) und das mindestens eine vom ersten Manipulator (21) nicht erfasste vorauseilende Stückgut (2v) jeweils Bestandteil einer innerhalb des ersten Handhabungsmoduls (20) und zweiten Handhabungsmoduls (30) gemeinsam ausgebildeten palettierfähigen Stückgutlage sind.

8. Vorrichtung (10) zur Durchführung eines Verfahrens zum Umgang mit in mindestens einer Reihe (1) hintereinander bewegten Stückgütern (2), umfassend
- wenigstens eine Transporteinrichtung (3), über welche unmittelbar aufeinanderfolgende Stückgüter (2) der Reihe (1) ohne Beabstandung als geschlossene Formation (F) in einer Transportrichtung (TR) zuführbar sind,
- mindestens ein erstes Handhabungsmodul (20) mit einem ersten Manipulator (21) zur Handhabung der Stückgüter (2) und einem dem ersten Manipulator (21) zugeordneten ersten Erfassungsbereich (22),
- wobei der erste Manipulator (21) zum klemmenden und/oder kraftschlüssigen und/oder formschlüssigen Entgegennehmen mindestens eines Stückgutes (2) aus der mittels der wenigstens einen Transporteinrichtung (3) in seinen ersten Erfassungsbereich (22) transportierten geschlossenen Formation (F) ausgebildet ist, sowie zum räumlichen Abtrennen des mindestens einen Stückgutes (2) von der geschlossenen Formation (F) und Überführen des mindestens einen Stückgutes (2) in eine erste Zielposition und/oder Zielausrichtung (P1) innerhalb des ersten Erfassungsbereichs (22),
- wobei der erste Manipulator (21) zum Erfassen wenigstens eines mindestens einem zuvorderst angeordneten Stückgut (2) der geschlossenen Formation (F) nacheilenden Stückgutes (2) ausgebildet ist, so dass der erste Manipulator (21) das mindestens eine zuvorderst angeordnete Stückgut (2) ohne Erfassung belässt und
- wobei der erste Manipulator (21) zum Schieben des mindestens einen zuvorderst angeordneten Stückgutes (2) in eine jeweilige für das zuvorderst angeordnete Stückgut (2) vorgesehene erste Position (T) ausgebildet ist,
- mindestens ein in Transportrichtung (TR) dem ersten Handhabungsmodul (20) zumindest bereichsweise fluchtend nachgeordnetes zweites Handhabungsmodul (30) mit einem zweiten Manipulator (31) zur Handhabung der Stückgüter (2) und einem dem zweiten Manipulator (31) zugeordneten zweiten Erfassungsbereich (32),
**dadurch gekennzeichnet, dass**
- die Vorrichtung (10) weiterhin eine Steuerungseinrichtung (100) umfasst, welche Steuerungseinrichtung (100) dazu ausgebildet ist, den ersten Manipulator (21) und den zweiten Manipulator (31) zur Durchführung des Verfahrens nach einem der Ansprüche 1 bis 7 anzusteuern.

9. Vorrichtung (10) nach Anspruch 8, wobei der zweite Manipulator (31) zum klemmenden und/oder kraftschlüssigen und/oder formschlüssigen Entgegennehmen mindestens eines aus dem ersten Erfassungsbereich (22) in den zweiten Erfassungsbereich (32) einlaufenden Stückgutes (2) ausgebildet ist, sowie zum Überführen des mindestens einen Stückgutes (2) in eine zweite Zielposition und/oder Zielausrichtung (P2) innerhalb des zweiten Erfassungsbereiches (32).

## Claims

1. A method for handling piece goods (2) being moved one after another in at least one row (1), wherein
- the piece goods (2) are supplied without spaces immediately one after another as a closed formation (F) in a transport direction (TR) to a first handling module (20) with a first manipulator (21) for handling piece goods (2) in a first seizing range (22) assigned to the first manipulator (21);
- wherein at least a part of the piece goods (2) supplied in closed formation (F) is seized in the first handling module (20) by the first manipulator (21) and is transferred to a first target position and/or target arrangement (P1) within the first seizing range (22);
- wherein the first manipulator (21) seizes at least one piece good (2) of the closed formation (F) in a clamping and/or force-locking and/or form-locking manner, spatially separates it from the subsequent piece goods (2) of the closed formation (F) and transfers it to the first target position and/or target arrangement (P1) within the first seizing range (22);
- and wherein, in a second handling module (30), which is arranged downstream in transport direction (TR) from the first handling module (20) and at least in some sections aligned therewith, and which has a second manipulator (31) for handling piece goods in a second seizing range (32) assigned to the second manipulator (31), at least a part of the supplied piece goods (2) is seized by the second manipulator (31) and is transferred to a second target position and/or target arrangement (P2) within the second seizing range (32),
- wherein a first part of piece goods (2) handled in the first handling module (20) at least partially comprises a second part of piece goods (2) handled in the second handling module (30),
- wherein at least one piece good (2) is seized from the closed formation (F) by the first manipulator (21), is spatially separated from the closed formation (F), and is brought into a defined relative target position and/or target alignment (P1) in relation to subsequent piece goods (2),
**characterised in that**
- the at least one seized piece good (2) is preceded by at least one further piece good (2) of the closed formation (F) that has not been seized by the first manipulator (21), which further piece good (2) is pushed intermittently together with the at least one seized piece good (2) into a first position (T) within the first seizing range (22),
- wherein, after the at least one piece good (2) that has not been seized by the first manipulator (21) has been transferred to the first position (T), the at least one piece good (2) seized by the first manipulator (21) is transferred to the first target position and/or target alignment (P1) and released there by the manipulator (21), wherein the first target position and/or target alignment (P1) is designed to be spaced apart from the first position (T).

2. The method according to claim 1, wherein the second manipulator (31) seizes at least one piece good (2) infeeding into the second seizing range (32) within the second seizing range (32) in a clamping and/or force-locking and/or form-locking manner, and transfers it to a second target position and/or target arrangement (P2) within the second seizing range (32).

3. The method according to claim 1 or 2, wherein the piece goods (2) that have been transferred to a target position and/or target arrangement within the first seizing range (22) and/or within the second seizing range (32) are continuously moved further in transport direction (TR), in particular, at a conveying speed that corresponds to the transport speed (v3) of the piece goods (2) of the closed formation (F).

4. The method according to one of the previous claims, wherein a part of piece goods (2) handled in the second handling module (30) does not correspond to a part of piece goods (2) handled in the first handling module (20).

5. The method according to one of the previous claims, wherein at least one palletisable layer arrangement or piece good layer is assembled from a plurality of piece goods (2) within the first seizing range (22) and/or within the second seizing range (32).

6. The method according to one of the previous claims, wherein the at least one piece good (2) arranged in the first position (T) or in the first target position and/or target arrangement (P1) forms a part of a first palletisable piece good layer formed within the first handling module (20), and/or wherein the at least one piece good (2) arranged in the first position (T) and not seized by the first manipulator (21) is seized by the second manipulator (31) after infeeding into the second seizing range (32) and is transferred to a second target position and/or target alignment (P2) within the second seizing range (32), wherein the at least one piece good (2) arranged in the second target position and/or target arrangement (P2) forms a part of a second palletisable piece good layer formed within the second handling module (30).

7. The method according to one of the claims 1 to 6, wherein the at least one piece good (2) seized by the first manipulator (21) and the at least one preceding piece good (2v) not seized by the first manipulator (21) are each part of a palletisable piece good layer formed together within the first handling module (20) and the second handling module (30).

8. An apparatus (10) to carry out a method for handling piece goods (2) being moved one after another in at least one row (1), the apparatus (10) comprising
- at least one transport device (3) via which piece goods (2) of the row (1) following immediately one after another are suppliable without spaces as closed formation (F) in a transport direction (TR),
- at least one first handling module (20) with a first manipulator (21) for handling the piece goods (2), and a first seizing range (22) assigned to the first manipulator (21),
- wherein the first manipulator (21) is designed to receive at least one piece good (2) in a clamping and/or force-locking and/or form-locking manner from the closed formation (F) transported into the first seizing range (22) of the manipulator (21) by means of the at least one transport device (3), as well as being designed to spatially separate the at least one piece good (2) from the closed formation (F), and to transfer the at least one piece good (2) to a first target position and/or target alignment (P1) within the first seizing range (22),
- wherein the first manipulator (21) is designed to seize at least one piece good (2) succeeding the foremost arranged piece good (2) of the closed formation (F) such that the first manipulator (21) leaves the at least one foremost arranged piece good (2) unseized, and
- wherein the first manipulator (21) is designed to push the at least one foremost arranged piece good (2) into a particular first position (T) provided for the foremost arranged piece good (2),
- at least one second handling module (30) arranged downstream in transport direction (TR) from the first handling module (20) and at least in some sections aligned therewith, which second handling module (30) has a second manipulator (31) for handling the piece goods (2) in a second seizing range (32) assigned to the second manipulator (31),
**characterised in that**
- the apparatus (10) moreover comprises a control device (100), which control device (100) is designed to control the first manipulator (21) and the second manipulator (31) to carry out the method according to one of the claims 1 to 7.

9. The apparatus (10) according to claim 8, wherein the second manipulator (31) is designed to receive at least one piece good (2) infeeding from the first seizing range (22) into the second seizing range (32) in a clamping and/or force-locking and/or form-locking manner, as well as to transfer the at least one piece good (2) to a second target position and/or target arrangement (P2) within the second seizing range (32).

## Revendications

1. Procédé de manipulation de produits de détail (2) déplacées les uns derrière les autres en au moins une rangée (1), dans lequel
- les produits de détail (2) sont amenés, en se suivent immédiatement sans espacement, en tant que formation fermée (F) dans une direction de transport (TR) à un premier module de manipulation (20) comprenant un premier manipulateur (21) destiné à manipuler des produits de détail (2) dans une première zone de saisie (22) associée au premier manipulateur (21);
- dans lequel au moins une partie des produits de détail (2) amenés en formation fermée (F) est saisie dans le premier module de manipulation (20) par le premier manipulateur (21) et est amenée dans une première position cible et/ou premier agencement cible (P1) à l'intérieur de la première zone de saisie (22);
- dans lequel le premier manipulateur (21) saisit par serrage et/ou par adhérence et/ou à engagement positif au moins un produit de détail (2) de la formation fermée (F); sépare physiquement les produits de détail suivants (2) de la formation fermée (F) et les achemine vers la première position cible et/ou agencement cible (P1) à l'intérieur de la première zone de saisie (22)
- et dans lequel au moins une partie des produits de détail (2) amenés est saisie par un deuxième manipulateur (31) dans un deuxième module de manipulation (30) qui est disposé en aval et de manière alignée, au moins par zones, du premier module de manipulation (20) dans la direction de transport (TR), et qui comprend ledit deuxième manipulateur (31) destiné à manipuler des produits de détail (2) dans une deuxième zone de saisie (32) associée au deuxième manipulateur (31), et est amenée dans une deuxième position cible et/ou un deuxième agencement cible (P2) à l'intérieur de la deuxième zone de saisie (32),
- dans lequel une première partie de produits de détail (2) manipulée dans le premier module de manipulation (20) comprend au moins en partie une deuxième partie de produits de détail (2) manipulée dans le deuxième module de manipulation (30),
- au moins un produit de détail (2) de la formation fermée (F) est saisi par le premier manipulateur (21), est séparé spatialement de la formation fermée (F) et est amené dans une position cible et/ou orientation cible (P1) rélative(s) définie(s) par rapport à des produits de détail (2) suivants,
**caractérisé par le fait que**
- en amont dudit au moins un produit de détail (2) saisi est situé au moins un autre produit de détail (2) de la formation fermée (F) non saisi par le premier manipulateur (21), qui est poussé temporairement conjointement avec ledit au moins un produit de détail saisi (2) dans une première position (T) à l'intérieur de la première zone de saisie (22),
- dans lequel, après que ledit au moins un produit de détail (2) non saisi a été amené par le premier manipulateur (21) dans la première position (T), ledit au moins un produit de détail (2) saisi par le premier manipulateur (21) est amené par le manipulateur (21) dans la première position cible et/ou orientation cible (P1) et est libéré dans celle-ci, dans lequel la première position cible et/ou orientation cible (P1) est réalisée à distance de la première position (T).

2. Procédé selon la revendication 1, dans lequel le deuxième manipulateur (31) saisit par serrage et/ou par adhérence et/ou à engagement positif à l'intérieur de la deuxième zone de saisie (32) au moins un produit de détail (2) entrant dans la deuxième zone de saisie (32) et amène celui-ci dans une deuxième position cible et/ou un deuxième agencement cible (P2) à l'intérieur de la deuxième zone de saisie (32).

3. Procédé selon la revendication 1 ou 2, dans lequel on continue à déplacer en continu les produits de détail (2) amenés dans une position cible et/ou un agencement cible, dans la direction de transport (TR) à l'intérieur de la première zone de saisie (22) et/ou à l'intérieur de la deuxième zone de saisie (32), en particulier à une vitesse de transport qui correspond à la vitesse de transport (v3) des produits de détail (2) de la formation fermée (F).

4. Procédé selon l'une quelconque des revendications précédentes, dans lequel une partie de produits de détail (2) manipulée dans le deuxième module de manipulation (30) ne correspond pas à une partie de produits de détail (2) manipulée dans le premier module de manipulation (20).

5. Procédé selon l'une quelconque des revendications précédentes, dans lequel au moins un agencement de couches palettisable ou une couche de produits de détail palettisable est assemblé(e) à partir d'une pluralité de produits de détail (2) à l'intérieur de la première zone de saisie (22) et/ou à l'intérieur de la deuxième zone de saisie (32).

6. Procédé selon l'une quelconque des revendications précédentes, dans lequel ledit au moins un produit de détail (2) disposé dans la première position (T) ou la première position cible et/ou le premier agencement cible (P1) fait partie d'une première couche de produits de détail palettisable formée à l'intérieur du premier module de manipulation (20) et/ou dans lequel ledit au moins un produit de détail (2) disposé dans la première position (T) et non saisi par le premier manipulateur (21) est saisi par le deuxième manipulateur (31) après être entré dans la deuxième zone de saisie (32) et est amené dans une deuxième position cible et/ou orientation cible (P2) à l'intérieur de la deuxième zone de saisie (32), dans lequel ledit au moins un produit de détail (2) disposé dans la deuxième position cible et/ou le deuxième agencement cible (P2) fait partie d'une deuxième couche de produits de détail palettisable formée à l'intérieur du deuxième module de manipulation (30).

7. Procédé selon l'une quelconque des revendications 1 à 8, dans lequel ledit au moins un produit de détail (2) saisi par le premier manipulateur (21) et ledit au moins un produit de détail (2v) situé en amont et non saisi par le premier manipulateur (21) font chacun partie d'une couche de produits de détail palettisable formée en commun à l'intérieur du premier module de manipulation (20) et du deuxième module de manipulation (30).

8. Dispositif (10) de mise en œuvre d'un procédé de manipulation de produits de détail (2) déplacés les uns derrière les autres en au moins une rangée (1), comprenant
- au moins un dispositif de transport (3) par l'intermédiaire duquel des produits de détail (2) immédiatement successifs de la rangée (1) peuvent être amenés sans espacement, en tant que formation fermée (F), dans une direction de transport (TR),
- au moins un premier module de manipulation (20) comprenant un premier manipulateur (21) destiné à manipuler les produits de détail (2) ainsi qu'une première zone de saisie (22) associée au premier manipulateur (21),
- dans lequel le premier manipulateur (21) est conçu pour recevoir par serrage et/ou par adhérence et/ou à engagement positif au moins un produit de détail (2) de la formation fermée (F) transportée au moyen dudit au moins un dispositif de transport (3) dans sa première zone de saisie (22), ainsi que pour séparer spatialement ledit au moins un produit de détail (2) de la formation fermée (F) et pour transférer ledit au moins un produit de détail (2) dans une première position cible et/ou orientation cible (P1) à l'intérieur de la première zone de saisie (22),
- et dans lequel ledit premier manipulateur (21) est conçu pour saisir au moins un produit de détail (2) situé en aval d'un produit de détail (2) de la formation fermée (F), qui est situé en premier, de sorte que ledit premier manipulateur (21) laisse ledit au moins un produit de détail (2) situé en premier, sans saisir celui-ci, et
- dans lequel ledit premier manipulateur (21) est conçu pour pousser ledit au moins un produit de détail (2) situé en premier dans une première position (T) respective prévue pour le produit de détail (2) situé en premier,
- au moins un deuxième module de manipulation (30) qui est disposé en aval et de manière alignée, au moins par zones, du premier module de manipulation (20) dans la direction de transport (TR), et qui comprend un deuxième manipulateur (31) destiné à manipuler les produits de détail (2) et une deuxième zone de saisie (32) associée au deuxième manipulateur (31),
**caractérisé par le fait que**
- le dispositif (10) comprend en outre un dispositif de commande (100), lequel dispositif de commande (100) est conçu pour commander le premier manipulateur (21) et le deuxième manipulateur (31) pour mettre en œuvre le procédé selon l'une quelconque des revendications 1 à 7.

9. Dispositif (10) selon la revendication 8, dans lequel le deuxième manipulateur (31) est conçu pour recevoir par serrage et/ou par adhérence et/ou à engagement positif au moins un produit de détail (2) entrant dans la deuxième zone de saisie (32) depuis la première zone de saisie (22), ainsi que pour transférer ledit au moins un produit de détail (2) dans une deuxième position cible et/ou orientation cible (P2) à l'intérieur de la deuxième zone de saisie (32).
